# EUROPEAN PATENT APPLICATION

(11) **EP 1 154 426 A2**
(43) Date of publication of application: **14.11.2001**
(21) Application number: 01304080.3
(22) Date of filing: 04.05.2001
(51) Int. Cl.: G11B 20/00, H04N 5/913

(54) **Copyright protecting method, recording method, recording apparatus, reproduction method and reproduction apparatus**

(30) Priority: 10.05.2000 JP 2000137546
(71) Applicant: Pioneer Corporation, Tokyo-to (JP)
(72) Inventor: Moriyama, Yoshiaki, Tokorozawa-shi, Saitama ken (JP); Kuroda, Kazuo, Tokorozawa-shi, Saitama ken (JP); Suzuku, Toshio, Tokorozawa-shi, Saitama ken (JP); Yoshida, Kazuyuki, Tokorozawa-shi, Saitama ken (JP)
(74) Representative: Haley, Stephen

(57) **Abstract**

A copyright protecting method of scrambling an information signal inputted via an input path and outputting it via an output path is provided. First, a selected condition to eliminate copying of the information signal via an unauthorized path is set. The selected condition includes combinations of a plurality of types of scramble systems applicable to the information signal and a plurality of types of the copy control information. Then, the type of the scramble system of the inputted information signal and the type of the copy control information of the inputted information signal are discriminated. Further, a predetermined scramble system is applied to the inputted information signal and a scrambled output is produced when a combination of the discriminated type of the scramble system and the discriminated type of the copy control information coincides with that included in the selected condition.

## Description

The present invention relates to a copyright protecting technique for contents recorded onto an information recording medium, and more specifically relates to unauthorized copy protecting technique in which a predetermined scramble system is applied to a digital signal corresponding to the contents and copy control information is given to the digital signal.

Recently, a technique for recording various contents such as image and music as a digital signal onto an information recording medium or for transmitting them as a digital signal has widely spread. These contents are originally objects of copyright protection. When an information recording medium on which the contents were recorded is unauthorizedly copied to be distributed, the copyright is infringed. Therefore, in order to protect the copyright of the contents effectively, various measures for forbidding unauthorized copy are requested.

Some methods of preventing unauthorized copy at the time of recording and transmission are known. In the methods, in order to prevent the above-mentioned unauthorized copy of contents, copy control information is given to the contents so as to be embedded as an electronic watermark into a digital signal or the contents are encrypted separately. A reproduction apparatus and a recording apparatus discriminate such copy control information so as to be capable of recognizing permission/forbiddance of copying and the number of copying of the contents.

However, in the prior cases, it was difficult to eliminate unauthorized recording apparatus and reproduction apparatus which do not give appropriate copy control information to contents. For example, in the case where contents whose number of copying is limited to one are copied, it is necessary to update the copy control information in the recording apparatus which executes copying so that copying after the one copying is forbidden. However, there considers a case where a recording apparatus is converted not to update copy control information, and thus contents are copied unauthorizedly. Since it is difficult to discriminate an unauthorized recording medium in which copy is executed by such an unauthorized recording apparatus, there arises a problem that such a recording medium is reproduced in an appropriate reproduction apparatus. Moreover, there considers a case where the reproduction apparatus which discriminates copy control information so as to limit a reproduction operation of contents based on discriminated results is converted so that the copy control information is not discriminated appropriately. There arises a problem that the contents which are reproduced by such an unauthorized reproduction apparatus can be copied also by an appropriate recording apparatus. As mentioned above, in the prior case, because of existence of the unauthorized recording apparatus and unauthorized reproduction apparatus, it is difficult to prevent propagation of unauthorizedly copied contents, and this interferes effective protection of the copyright of contents.

In addition, there arises a problem that when a reproducing signal is scrambled to be outputted, a receiving apparatus outputs a reproducing signal of unauthorizedly recorded contents which is disguised as a broadcasting signal and an appropriate recording apparatus records the reproducing signal.

The present invention has been developed in order to solve the above problems and it is an object of the present invention to provide a copyright protecting method, a recording method, a recording apparatus, a reproduction method and a reproduction apparatus which are capable of cutting off propagation of unauthorizedly copied contents effectively and protecting the contents under copyright securely.
The above object of the present invention can be achieved by a copyright protecting method of the present invention. The method is one for scrambling an information signal inputted via an input path and outputting it via an output path. In the method, the information signal corresponds to contents which are protected under copyright. Also, the information signal includes copy control information, and is scrambled by means of a predetermined type of scramble system. The copyright protecting method includes a discriminating step. The discriminating step discriminates the type of the scramble system of the inputted information signal and the type of the copy control information of the inputted information signal. The copyright protecting method also includes a scramble system applying step. The scramble system applying step applies a predetermined scramble system to the inputted information signal and produces a scrambled output when a combination of the discriminated type of the scramble system and the discriminated type of the copy control information coincides with that included in a selected condition. The selected condition includes combinations of a plurality of types of scramble systems applicable to the information signal and a plurality of types of the copy control information to eliminate copying of the information signal via an unauthorized path.

According to the present invention, when the information signal corresponding to the contents is inputted into a specified equipment, the scramble system applied to the information signal and the copy control information are discriminated. The discriminated results are verified with predetermined selected conditions, and when the discriminated results coincide with the selected conditions, a predetermined scramble system is applied to the information signal so that the information signal is outputted. Therefore, the information signal obtained via an appropriate path is outputted selectively. Moreover, the system can be constituted in such a manner that when an unauthorized path is used, the selected conditions are set so that the information signal is not outputted. As a result, unauthorized copying can be prevented effectively.

In one of aspect of the present invention, a plurality of the scramble systems include scramble processings each having different algorithms and corresponding descramble processings.

According to this aspect of the invention, since a plurality of the scramble systems applicable to the information signal have different algorithms for descramble processings corresponding to the scramble processings, it is difficult to make unauthorized copies by using an unauthorized recording apparatus, for example, and thus the effect of the prevention of unauthorized copying can be heightened.

In another aspect of the present invention, a plurality of the scramble systems include scramble processings each having different keys and corresponding descramble processings.

According to the third aspect of the invention, since a plurality of the scramble systems have different keys for descramble processings corresponding to scramble processings, unauthorized copying can be prevented by a simple structure.

In another aspect of the present invention, the copy control information includes first control information indicating permission to copy the information signal only once and second control information indicating prohibition of copying the information signal after the information signal is copied once.

According to this aspect of the invention, in the case where the first control information is set in the information signal, only one copy is permitted. In the case where the second control information is set, copying is forbidden. Therefore, for example, when an unauthorized recording apparatus should write the second information, this is not executed. Even in the case where the contents are written in the state that the first control information is set, such an unauthorized action can be eliminated easily by setting the above-mentioned selected conditions.

The above object of the present invention can be achieved by a recording method of the present invention. The recording method is one for recording an information signal inputted via an input path on the recording medium according to copy control information. The information signal corresponds to contents which are to be protected under copyright. The method includes a discriminating step. The discriminating step discriminates the type of the scramble system of the inputted information signal and the type of the copy control information of the inputted information signal. The method also includes a scramble system applying step. The scramble system applying step applies a predetermined scramble system to the inputted information signal and produces a scrambled output when a combination of the discriminated type of the scramble system and the discriminated type of the copy control information coincides with that included in a selected condition. In addition, the method includes a recording step. The recording step records the scrambled output on the recording medium. Further, the selected condition includes combinations of a plurality of types of scramble systems applicable to the information signal and a plurality of types of the copy control information to eliminate copying of the information signal via an unauthorized path.

According to the present invention, the information signal can be recorded onto the recording medium based on the function similar to that of the present invention described above. Therefore, the information signal inputted via an appropriate path is written onto the recording medium selectively. Moreover, in the case where an unauthorized path is used, the information signal cannot be written onto the recording medium so that unauthorized copying can be prevented effectively.

In one aspect of the present invention, the scramble system applying step applies a scramble system different from that of the information signal recorded on a prerecorded disc to the inputted information signal when the discriminated type of the copy control information of the inputted information signal coincides with that of the inputted information signal recorded on the prerecorded disc and produces the scrambled output.

According to this aspect, the scramble system different from that of the information signal recorded on the prerecorded disc is applied to the information signal recorded on the recording medium, so that unauthorized copying can be prevented effectively.

In another aspect of the present invention, the copy control information permits only one copy of the information signal.

According to this aspect, after the information signal is copied once, the scramble system is changed as described above. Therefore, unauthorized copying can be prevented effectively.

In another aspect of the present invention, the recording method further includes a descramble system applying step. The descramble system applying step applies a predetermined descramble system to the inputted information signal. In this aspect, the scramble system applying step applies the predetermined scramble system to the inputted information signal after the predetermined descramble system is applied.

According to this aspect, it is difficult to make unauthorized copies by using an unauthorized recording apparatus, and thus the effect of the prevention of unauthorized copying can be heightened.

In another aspect of the present invention, the predetermined descramble system is restricted to a descramble system corresponding to a scramble system which is previously set.

According to this aspect, it is difficult to make unauthorized copies by using an unauthorized recording apparatus, and thus the effect of the prevention of unauthorized copying can be heightened.

In another aspect of the present invention, the descramble system applying step applies two types of the predetermined descramble systems to two types of the inputted information signals respectively. One type of the predetermined descramble system is a scramble system of the information signal to which the copy control information for permitting only one copy of the information signal outputted from a receiving apparatus is given. Another type of the predetermined descramble system is a scramble system of the information signal outputted when reproduction is executed from a recording medium to which the copy control information for permitting only one copy of the information signal is given.

According to this aspect, it is difficult to make unauthorized copies by using an unauthorized recording apparatus, and thus the effect of the prevention of unauthorized copying can be heightened.

In another aspect of the present invention, the scramble system applying step applies only one predetermined scramble system to the inputted information signal. The only one predetermined scramble system is a scramble system which is applied to the case where recording information to which copy control information for forbidding copies after the information signal is copied once is given is recorded onto the recording medium.

According to this aspect, it is difficult to make unauthorized copies by using an unauthorized recording apparatus, and thus the effect of the prevention of unauthorized copying can be heightened.

The above object of the present invention can be achieved by a recording apparatus of the present invention. The recording apparatus records an information signal inputted via an input path onto a recording medium according to copy control information. The information signal corresponds to contents which are to be recorded on the recording medium and includes copy control information. Also, the information signal is scrambled by means of a predetermined type of scramble system. The recording apparatus includes a discriminating device. The discriminating device discriminates the type of the scramble system of the inputted information signal and the type of the copy control information of the inputted information signal. The recording apparatus also includes a scramble system applying device. The scramble system applying device applies a predetermined scramble system to the inputted information signal and producing a scrambled output when a combination of the discriminated type of the scramble system and the discriminated type of the copy control information coincides with that included in a selected condition. The recording apparatus further includes a recording device. The recording device records the scrambled output onto the recording medium. In addition, the selected condition includes combinations of a plurality of types of scramble systems applicable to the information signal and a plurality of types of the copy control information to eliminate copying of the information signal via an unauthorized path.

According to the present invention, the information signal can be recorded onto the recording medium based on the function similar to that of the present invention described above. Therefore, the information signal inputted via an appropriate path is written onto the recording medium selectively. Moreover, in the case where an unauthorized path is used, the information signal cannot be written onto the recording medium so that unauthorized copying can be prevented effectively.

In one aspect of the present invention, the scramble system applying device applies a scramble system different from that of the information signal recorded on a prerecorded disc to the inputted information signal when the discriminated type of the copy control information of the inputted information signal coincides with that of the inputted information signal recorded on the prerecorded disc and produces the scrambled output.

According to this aspect, the scramble system different from that of the information signal recorded on the prerecorded disc is applied to the information signal recorded on the recording medium, so that unauthorized copying can be prevented effectively.

In another aspect of the present invention, the copy control information permits only one copy of the information signal corresponding to the contents.

According to this aspect, after the information signal is copied once, the scramble system is changed as described above. Therefore, unauthorized copying can be prevented effectively.

In another aspect of the present invention, the recording apparatus further includes a descramble system applying device. The descramble system applying device applies a predetermined descramble system to the inputted information signal. The scramble system applying device applies the predetermined scramble system to the inputted information signal after the predetermined descramble system is applied.

According to this aspect, it is difficult to make unauthorized copies by using an unauthorized recording apparatus, and thus the effect of the prevention of unauthorized copying can be heightened.

In another aspect of the present invention, the predetermined descramble system is restricted to a descramble system corresponding to a scramble system which is previously set.

According to this aspect, it is difficult to make unauthorized copies by using an unauthorized recording apparatus, and thus the effect of the prevention of unauthorized copying can be heightened.

In another aspect of the present invention, the descramble system applying device applies two types of the predetermined descramble systems to two types of the inputted information signals respectively. One type of the predetermined descramble system is a scramble system of the information signal to which the copy control information for permitting only one copy of the information signal outputted from a receiving apparatus is given. Another type of the predetermined descramble system is a scramble system of the information signal outputted when reproduction is executed from a recording medium to which the copy control information for permitting only one copy of the information signal is given.

According to this aspect, it is difficult to make unauthorized copies by using an unauthorized recording apparatus, and thus the effect of the prevention of unauthorized copying can be heightened.

In another aspect of the present invention, the scramble system applying device applies only one predetermined scramble system to the inputted information signal, and the only one predetermined scramble system is a scramble system which is applied to the case where recording information to which copy control information for forbidding copies after the information signal is copied once is given is recorded onto the recording medium.

According to this aspect, it is difficult to make unauthorized copies by using an unauthorized recording apparatus, and thus the effect of the prevention of unauthorized copying can be heightened.

The above object of the present invention can be achieved by a reproducing method of the present invention. The reproducing method is one for reading an information signal from a recording medium and reproducing it according to copy control information. The information signal corresponds to contents which are protected under copyright, being recorded on the recording medium via an input path. Also, the information signal includes copy control information. Further, the information signal is scrambled by means of a redetermined type of scramble system. The reproducing method includes a discriminating step of discriminating the type of the scramble system of the read information signal and the type of the copy control information of the read information signal. The reproducing method also includes a scramble system applying step. The scramble system applying step applies a predetermined scramble system to the read information signal and producing a scrambled output when a combination of the discriminated type of the scramble system and the discriminated type of the copy control information coincides with that included in a selected condition. The reproducing method further includes a reproducing step of reproducing the scrambled output. In addition, the selected condition includes combinations of a plurality of types of scramble systems applicable to the information signal and a plurality of types of the copy control information to eliminate copying of the information signal via an unauthorized input path.

According to the present invention, the information signal can be reproduced from the recording medium based on the function similar to that of the present invention described above. Therefore, the information signal which is recorded onto the recording medium and obtained via an appropriate path can be reproduced selectively. Moreover, in the case of the recording medium via an unauthorized path, the information signal cannot be reproduced so that unauthorized copying can be prevented effectively.

In one aspect of the present invention, different scramble systems are applied to the information signal according to the combinations of the scramble systems of the information signal recorded on the recording medium and the copy control information signals.

According to this aspect, the information signal which is recorded onto the recording medium and obtained via an appropriate path can be reproduced selectively. Moreover, in the case of the recording medium via an unauthorized path, the information signal cannot be reproduced so that unauthorized copying can be prevented effectively.

In another aspect of the present invention, the scramble system applied to the information signal when reproduction is executed from the recording medium to which copy control information for permitting only one copy of the information signal is given, is different from a scramble system, which is applied to the information signal when the reproduction is executed from the recording medium onto which the information signal with copy control information for forbidding copies after the information signal is copied once is recorded. Also, the scramble system applied to the information signal when reproduction is executed from the recording medium is different from the scramble system which is applied to the information signal with copy control information for permitting only one copy of the information signal outputted from a receiving apparatus.

According to this aspect, the information signal which is recorded onto the recording medium and obtained via an appropriate path can be reproduced selectively. Moreover, in the case of the recording medium via an unauthorized path, the information signal cannot be reproduced so that unauthorized copying can be prevented effectively.

The above object of the present invention can be achieved by a reproducing apparatus of the present invention. The reproducing apparatus reads an information signal from a recording medium and reproduces it according to copy control information. The information signal corresponds to contents which are protected under copyright, being recorded on the recording medium via an input path. The information signal also includes copy control information. Further, the information signal is scrambled by means of a predetermined type of scramble system. The reproducing apparatus includes a discriminating device. The discriminating device discriminates the type of the scramble system of the read information signal and the type of the copy control information of the read information signal. The reproducing apparatus also includes a scramble system applying device. The scramble system applying device applies a predetermined scramble system to the read information signal and producing a scrambled output when a combination of the discriminated type of the scramble system and the discriminated type of the copy control information coincides with that included in a selected condition. The reproducing apparatus further includes a reproducing device. The reproducing device reproduces the scrambled output. In addition, the selected condition includes combinations of a plurality of types of scramble systems applicable to the information signal and a plurality of types of the copy control information to eliminate copying of the information signal via an unauthorized input path.

According to the present invention, the information signal can be reproduced from the recording medium based on the function similar to that of the present invention described above. Therefore, the information signal which is recorded onto the recording medium and obtained via an appropriate path can be reproduced selectively. Moreover, in the case of the recording medium via an unauthorized path, the information signal cannot be reproduced so that unauthorized copying can be prevented effectively.

In one aspect of the present invention, different scramble systems are applied to the information signal according to the combinations of the scramble systems of the information signal recorded on the recording medium and the copy control information signals.

According to this aspect, the information signal which is recorded onto the recording medium and obtained via an appropriate path can be reproduced selectively. Moreover, in the case of the recording medium via an unauthorized path, the information signal cannot be reproduced so that unauthorized copying can be prevented effectively.

In another aspect of the present invention, the scramble system applied to the information signal when reproduction is executed from the recording medium to which copy control information for permitting only one copy of the information signal is given, is different from a scramble system, which is applied to the information signal when the reproduction is executed from the recording medium onto which the information signal with copy control information for forbidding copies after the information signal is copied once is recorded. The scramble system applied to the information signal when reproduction is executed from the recording medium is also different from the scramble system, which is applied to the information signal with copy control information for permitting only one copy of the information signal outputted from a receiving apparatus.

According to this aspect, the information signal which is recorded onto the recording medium and obtained via an appropriate path can be reproduced selectively. Moreover, in the case of the recording medium via an unauthorized path, the information signal cannot be reproduced so that unauthorized copying can be prevented effectively.

The above object of the present invention can be achieved by a reproducing method of the present invention. The reproducing method is one for reading an information signal from a recording medium and reproducing it according to copy control information. The information signal corresponds to contents which are protected under copyright and is recorded on the recording medium via an input path. The information signal further includes copy control information and is scrambled by means of a predetermined type of scramble system. The reproducing method includes a discriminating step. The discriminating step discriminates the type of the scramble system of the read information signal and the type of the copy control information of the read information signal. The reproducing method also includes a forbidding reproducing step. The forbidding reproducing step forbids reproducing the read information signal when a combination of the discriminated type of the scramble system and the discriminated type of the copy control information does not coincide with that included in a selected condition. The selected condition includes combinations of a plurality of types of scramble systems applicable to the information signal and a plurality of types of the copy control information to eliminate copying of the information signal via an unauthorized input path.

According to the present invention, the information signal which is recorded onto the recording medium and obtained via an appropriate path can be reproduced selectively. Moreover, in the case of the recording medium via an unauthorized path, the information signal cannot be reproduced so that unauthorized copying can be prevented effectively.

In one aspect of the present invention, different scramble systems are applied to the information signal according to combinations of the scramble systems of information signal recorded onto the recording medium and the copy control information signals.

According to the present invention, the information signal which is recorded onto the recording medium and obtained via an appropriate path can be reproduced selectively. Moreover, in the case of the recording medium via an unauthorized path, the information signal cannot be reproduced so that unauthorized copying can be prevented effectively.

In another aspect of the present invention, the scramble system applied to the information signal when reproduction is executed from the recording medium to which copy control information for permitting only one copy of the information signal is given, is different from a scramble system, which is applied to the information signal when the reproduction is executed from the recording medium onto which the information signal with copy control information for forbidding copies after the information signal is copied once is recorded. The scramble system applied to the information signal when reproduction is executed from the recording medium is also different from the scramble system, which is applied to the information signal with copy control information for permitting only one copy of the information signal outputted from a receiving apparatus.

According to the present invention, the information signal which is recorded onto the recording medium and obtained via an appropriate path can be reproduced selectively. Moreover, in the case of the recording medium via an unauthorized path, the information signal cannot be reproduced so that unauthorized copying can be prevented effectively.

The above object of the present invention can be achieved by a reproducing apparatus of the present invention. The reproducing apparatus reads an information signal from a recording medium and reproducing it according to copy control information. The information signal corresponds to contents which are protected under copyright and is recorded on the recording medium via an input path. The information signal also includes copy control information and is scrambled by means of a predetermined type of scramble system. The reproducing apparatus includes a discriminating device. The discriminating device discriminates the type of the scramble system of the read information signal and the type of the copy control information of the read information signal. The reproducing apparatus also includes a forbidding reproducing device. The forbidding reproducing device forbids reproducing the read information signal when a combination of the discriminated type of the scramble system and the discriminated type of the copy control information does not coincide with that included in a selected condition. The selected condition includes combinations of a plurality of types of scramble systems applicable to the information signal and a plurality of types of the copy control information to eliminate copying of the information signal via an unauthorized input path.

According to the present invention, the information signal which is recorded onto the recording medium and obtained via an appropriate path can be reproduced selectively. Moreover, in the case of the recording medium via an unauthorized path, the information signal cannot be reproduced so that unauthorized copying can be prevented effectively.

In one aspect of the present invention, different scramble systems are applied to the information signal according to combinations of the scramble systems of information signal recorded onto the recording medium and the copy control information signals.

According to the present invention, the information signal which is recorded onto the recording medium and obtained via an appropriate path can be reproduced selectively. Moreover, in the case of the recording medium via an unauthorized path, the information signal cannot be reproduced so that unauthorized copying can be prevented effectively.

In another aspect of the present invention, the scramble system applied to the information signal when reproduction is executed from the recording medium to which copy control information for permitting only one copy of the information signal is given, is different from a scramble system, which is applied to the information signal when the reproduction is executed from the recording medium onto which the information signal with copy control information for forbidding copies after the information signal is copied once is recorded. The scramble system applied to the information signal when reproduction is executed from the recording medium is also different from the scramble system, which is applied to the information signal with copy control information for permitting only one copy of the information signal outputted from a receiving apparatus.

In the Drawings:
FIG. 1 is a block diagram showing a system structure for explaining the present invention;
FIG. 2 is a diagram showing a corresponding relationship between an input and an output of a recording apparatus according to an embodiment of the present invention;
FIG. 3 is a diagram showing a corresponding relationship between an input and an output of a reproduction apparatus according to the present embodiment;
FIG. 4 is a block diagram showing a schematic structure of the recording apparatus according to the present embodiment;
FIG. 5 is a flow chart showing a recording operation in the recording apparatus according to the present embodiment;
FIG. 6 is a block diagram showing a schematic structure of the reproduction apparatus according to the present embodiment; and
FIG. 7 is a flow chart showing a reproduction operation in the reproduction apparatus according to the present embodiment.

There will be explained below a preferred embodiment of the present invention with reference to the drawings. The present embodiment explains the case where the present invention is applied to a recording apparatus for performing a recording operation and a reproduction apparatus for performing a reproduction operation on a disc on which information signals corresponding to various contents are recorded.

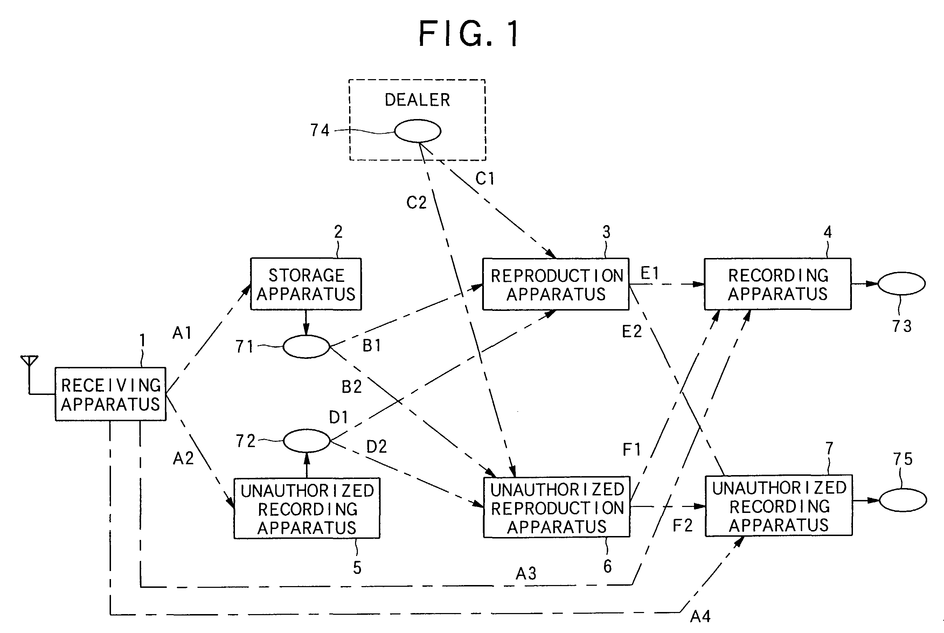

At first, an outline of the present invention will be explained with reference to FIGS. 1 to 3. FIG. 1 is a block diagram showing a system structure for explaining the present invention. FIG. 1 shows a receiving apparatus 1, a recording apparatus 2, a reproduction apparatus 3 and a recording apparatus 4 of the present invention, unauthorized recording apparatuses 5 and 7 and an unauthorized reproduction apparatus 6 which are converted for unauthorized copying or the like, discs 71 to 73 on which digital signals corresponding to contents can be written, and a prerecorded disc 74 on which contents are previously recorded and which is supplied from a dealer or the like.

The present embodiment adopts a plurality of scramble systems which are applicable to digital signals corresponding to contents. Namely, five systems A, B, C, D and E are assumed, and the systems A through E are selectively used in respective equipments as mentioned later so that digital signals are scrambled or descrambled appropriately. Here, the scramble means that a digital signal is encrypted, and the descramble means that the scrambled digital signal is decrypted. Moreover, in the discs 71 through 73 and the prerecorded disc 74, the above-mentioned copy control information (CCI) is recorded in predetermined recording regions according to an electronic watermark technique. Further, similarly copy control information is given also to digital signals which are transmitted between the equipments.

As the above plural scramble systems, plural systems in which algorithms are different from one another may be prepared. In addition, a plurality of keys which are used for scramble may be set. The former case can heighten an effect of unauthorized copy prevention, but the latter case can simplify the system structure.

The copy control information includes a code which permits only one copy of contents (Copy Once), a code which forbids a copy of contents (Never Copy), a code which permits free copies of contents (Copy Free), a code which forbids copies after one copy of contents (No More Copy) and the like. In the case of Copy Free, it is assumed that the copy control information is not given.

At first, there will be explained below a regular recording/reproduction operation by means of the recording apparatuses 2 and 4 and the reproduction apparatus 3 in the system structure shown in FIG. 1. In the structure shown in FIG. 1, the receiving apparatus 1 has a function as a set top box for receiving a transmission signal transmitted from the outside by means of a radio wave and demodulating a digital signal corresponding to contents to output it to the outside. Here, the digital signal outputted from the receiving apparatus 1 is scrambled according to the above system C and "Copy Once" as the copy control information is set to the digital signal.

The recording apparatuses 2 and 4 shown in FIG. 1 select one of the systems C and E and descramble a digital input signal according to the scramble system of the digital input signal. When the selected system coincides with a predetermined selected condition, the descrambled digital signal is scrambled by the system B. Then, a digital signal whose copy control information is updated is written into a loaded disc. The concrete structures and operations of the recording apparatuses 2 and 4 will be mentioned later.

In addition, the reproduction apparatus 3 reads the digital signal recorded on the attached disc and discriminates the scramble system and the copy control information so as to control the permission/forbiddance of reproduction. When the reproduction is permitted, the system A or B is selected and the digital signal is descrambled, and the system D or E is selected according to the predetermined selected condition so that the digital signal is scrambled and is outputted to the outside. The concrete structure and operation of the reproduction apparatus 3 will be also described later.

In the structure shown in FIG. 1, when a digital signal, to which "Copy Once" is given as the copy control information and which is scrambled by the system C, is outputted from the receiving apparatus 1, the digital signal is inputted into the recording apparatus 2 via a path A 1. Thereafter, the digital signal, which is descrambled according to the system C and which is scrambled by the system B in the recording apparatus 2, is recorded in the disc 71. At this time, the copy control information is updated to "No More Copy" so as to be given to the digital signal, and this copy control information is written as electronic watermark in the disc 71. At this time, the updating is normally executed by additional writing of another electronic watermark.

Meanwhile, the digital signal outputted from the receiving apparatus 1 can be inputted into the unauthorized recording apparatus 5 via the path A2. This unauthorized recording apparatus 5 has basically common structure and operation with those of the recording apparatus 2, but copy control information is unauthorizedly given to a digital signal. Namely, the unauthorized recording apparatus 5 is converted so that digital information whose copy control information is set as "Copy Once" is recorded in the disc 72 without updating the copy control information into "No More Copy". Since the unauthorized recording apparatus 5 only has a scramble circuit of the system B, a digital signal to which the copy control information "Copy Once" is given is recorded in the disc 72 with scrambling the digital signal by means of the system B or without scrambling it.

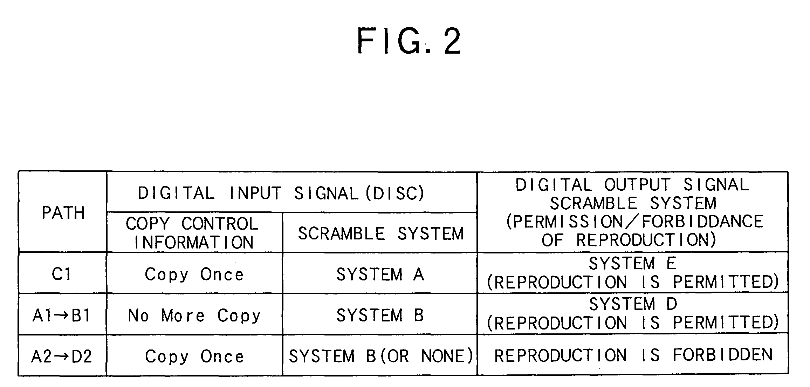

Next, the prerecorded disc 73 by way of a path C1, the appropriate disc 71 by way of a path B 1 and the unauthorized disc 72 by way of a path D 1 can be attached to the reproduction apparatus 3. The discs 71, 72 and 73 are of the same type physically, and they are not distinguished in physical format. FIG. 2 shows a corresponding relationship between digital input signals read from the respective discs and digital output signals outputted to the outside in the reproduction apparatus 3. As shown in FIG. 2, the scramble systems which are used for the permission/forbiddance of the reproduction of the digital output signals and for the reproduction are defined based on selected conditions obtained by combining the copy control information and the scramble systems of the digital input signals.

In FIG. 2, the condition which permits the reproduction in the reproduction apparatus 3 includes two cases based on the combinations of the copy control information and the scramble systems of the digital input signals. The first one is the case where a digital input signal satisfies the conditions of "Copy Once" and the system A, and this corresponds to the prerecorded disc 74 via the path C1. The second one is the case where a digital input signal satisfies the conditions of "No More Copy" and the system B, and this corresponds to the disc 71 via the path A1 and the path B1 where the recording was executed in the recording apparatus 2. Moreover, the scramble systems of the respective digital output signals are set as the system E in the first case, and set as the system D in the second case.

On the contrary, a digital input signal scrambled by the system B in which the copy control information is "Copy Once" is prohibited to be reproduced. This corresponds to the unauthorized disc 72 via the path A2 and path D2 on which the recording is executed by the unauthorized recording apparatus 5. In such a manner, it is found that reproduction from an unauthorized copy disc can be prevented effectively according to the selected conditions shown in FIG. 2.

Meanwhile, in FIG. 1, the disc 71 on which the recording is executed by the recording apparatus 2 can be loaded to the unauthorized reproduction apparatus 6 via the path B2. This unauthorized reproduction apparatus 6 basically has the same structure and operation as those of the reproduction apparatus 3, but the copy control information of a digital signal is discriminated unauthorizedly. Namely, the selected condition 2 of Fig. 2 are converted so that although the copy control information "Copy Once" corresponds to the reproduction forbiddance, when the unauthorized disc 72 on which the recording is executed via the path D2 by the unauthorized recording apparatus 5 is loaded, the copy control information "Copy Once" is discriminated as "No More Copy". Therefore, at the time of the condition where the reproduction is originally forbidden, a digital signal is scrambled by the system D so that the digital signal to which the copy control information "Copy Once" is given is outputted to the outside.

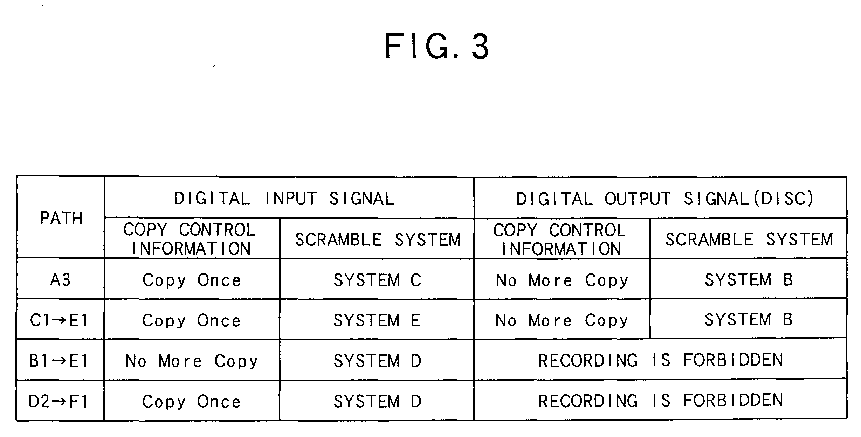

Next, a digital signal from the receiving apparatus 1 via the path A3, a digital output signal from the reproduction apparatus 3 via the path E1 and a digital output signal from the unauthorized reproduction apparatus 6 via the path F1 can be inputted into the recording apparatus 4. FIG. 3 shows a corresponding relationship between the digital input signal outputted from the outside in the recording apparatus 4 and the digital output signal recorded on the disc 73. In FIG. 3 similarly to the case of FIG. 2, the predetermined selected conditions are shown, and the scramble systems which are used for the permission/forbiddance of the recording and the recording onto the disc 73 are defined.

In FIG. 3, as the condition that the recording in the recording apparatus 4 is permitted, there are two cases based on combinations of the copy control information and the scramble systems of a digital input signal. The first one is that a digital input signal satisfies the conditions of "Copy Once" and the system C, and this corresponds to the digital signal from the receiving apparatus 1 via the path A3. The second one is that a digital input signal satisfies the conditions of "Copy Once" and the system E, and this corresponds to the prerecorded disc 74 via the path C1 and the path E1. Moreover, the scramble system of a digital output signal recorded on the disc 73 is set as the system B, and the copy control information "Copy Once" is updated to "No More Copy".

On the contrary, as the condition that the recording in the recording apparatus 4 is forbidden, there is a case of a digital input signal which is scrambled by the system D and whose copy control information is "No More Copy", and a case of a digital input signal which is scrambled by the system D and whose copy control information is "Copy Once". The former one is a digital signal which is inputted via the path B1 and the path E1 in such a manner that the copy control information is updated to "No More Copy" as a result of one copy in the recording apparatus 2. The latter one is a digital signal which is inputted via the path F1 in such a manner that the unauthorized disc 72 where the recording is executed in the unauthorized recording apparatus 5 is reproduced by the unauthorized reproduction apparatus 6 via the path D2. In such a manner, it is found that the recording on a reproduced unauthorized copy disc can be prevented effectively by the selected conditions shown in FIG. 3.

Next, a digital signal from the receiving apparatus 1 via the path A4, a digital output signal from the reproduction apparatus 3 via the path E2 and a digital output signal from the unauthorizedly reproduction apparatus 6 via the path F2 can be inputted into the unauthorized recording apparatus 7. Similarly to the unauthorized recording apparatus 5, this unauthorized recording apparatus 7 basically has the same structure and operation as those of the regular recording apparatus 2, but the copy control information is given to a digital signal unauthorizedly. Therefore, the unauthorized recording apparatus 7 also has the predetermined selected conditions similarly to FIG. 3, and the scramble systems which are used for the permission/forbiddance of the recording on the disc 75 and for the recording are defined.

Namely, as the condition that the recording by the unauthorized recording apparatus 7 is permitted, there are two cases based on combinations of the copy control information and the scramble systems. The first one is the case where a digital input signal satisfies the conditions of "Copy Once" and the system C, and this corresponds to the digital signal from the receiving apparatus 1 via the path A4. The second one is the case where a digital input signal satisfies the conditions of "Copy Once" and the system E, and this corresponds to the prerecorded disc 74 via the path C2 and the path F2. Here, the scramble system of a digital output signal to be recorded on the disc 75 is set as the system B, but since this apparatus is an unauthorized recording apparatus, the copy control information "Copy Once" is not updated.

On the contrary, as the condition that the recording by the unauthorized recording apparatus 7 is forbidden, there are a case of a digital input signal whose copy control information is "No More Copy" and which is scrambled by the system D, and a case of a digital input signal whose copy control information is "Copy Once" and which is scrambled by the system D. The first one is a digital signal which is inputted via the path B1 and the path E2 in such a manner that the copy control information is updated to "No More Copy" as a result of one copy in the recording apparatus 2. The latter one is a digital signal which is inputted via the path F2 in such a manner that the unauthorized disc 72 on which the recording is executed by the unauthorized recording apparatus 5 is reproduced by the unauthorized reproduction apparatus 6 via the path D2. In such a manner, since when the scramble according to the system D is executed, the recording is forbidden by the predetermined selected conditions shown in FIG. 3 regardless of the copy control information, it is found that the recording on a reproduced unauthorized copy disc can be prevented effectively even by the unauthorized recording apparatus 7.

In addition, even in the case where the unauthorized recording apparatus 7 is converted so as to ignore the recording forbiddance condition and execute recording, since the recording apparatus 2 and 4 before the conversion do not have a descramble circuit which copes with the system D, the unauthorized recording apparatus 7 also cannot execute descramble of the system D, and if the recording is executed directly, reproduction is impossible.

In the present embodiment, an explanation will be given in the case where the five scramble systems A through E are assumed, but the present invention is not limited to this, and combinations of scramble systems can be determined properly as long as these systems falls within a range that copying of a digital signal via an unauthorized path can be prevented. For example, when a scramble system of a digital output signal of a reproduction apparatus is set to be identical to a scramble system recorded on a disc, the system D may be the same as the system B, or the system E may be the same as the system A. Moreover, the system D is used for the state that the system B is given so that double scramble may be executed. Similarly, the system E is used for the state that the system A is given so that double scramble may be executed.

However, when the system D is completely the same as the system B, in the case where the unauthorized recording apparatus is converted as mentioned above, there is a danger that reproduction is executed from an unauthorized disc on which the recording is executed in the system D. This is applied to the case where the system E is the same as the system A. In this case, a scramble key should be changed or keys should be subject to different encryption processings at the time of recording and transmission to a disc.

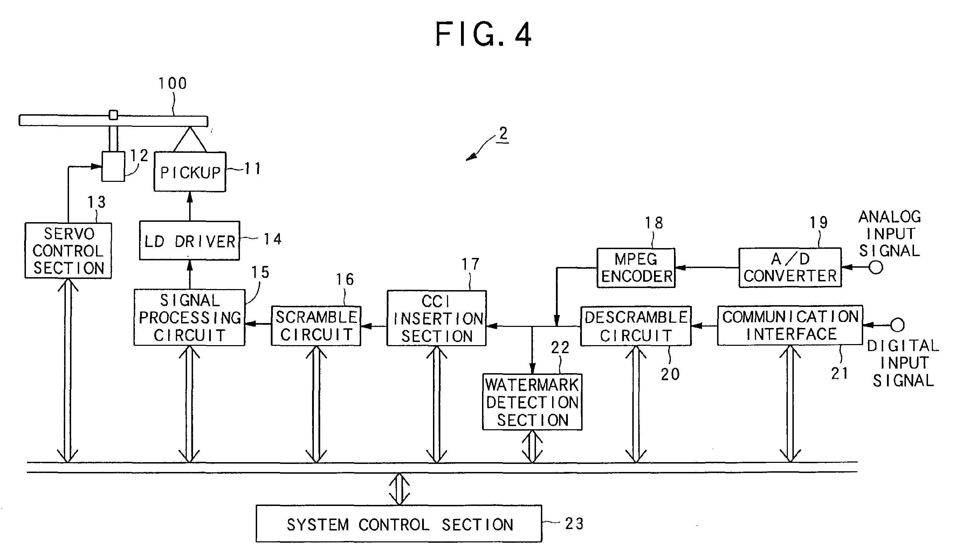

Next, Fig. 4 is a block diagram showing a schematic structure of the recording apparatus 2 according to the present embodiment. The recording apparatus 4 has the same structure as that of the recording apparatus 2. The recording apparatus 2 shown in FIG. 4 is composed of a pickup 11, a spindle motor 12, a servo control section 13, an LD driver 14, a signal processing circuit 15, a scramble circuit 16, a CCI insertion section 17, an MPEG encoder 18, an A/D converter 19, a descramble circuit 20, a communication interface 21, a watermark detection section 22 and a system control section 23. As mentioned above, updating of copy control information by means of a watermark is executed by additionally inserting a watermark for updating.

In the above structure, as a disc 100 loaded to the recording apparatus 2, for example, a DVD as an information recording medium which is capable of recording an information signal is used. When the disc 100 is loaded to the recording apparatus 2, while a constant linear velocity is maintained by the servo control section 13, the disc 100 is driven to be rotated by the spindle motor 12. A laser beam is emitted onto the disc 100 from the pickup 11, and a predetermined information signal is written thereinto. The information signal to be written into the disc 100 is generated based on an analog input signal or a digital input signal inputted from the outside in the following manner.

At first, a digital input signal inputted from an external equipment is inputted into the descramble circuit 20 via the communication interface 21. The communication interface 21 performs a predetermined communication interface operation with an externally connected equipment according to the specification of IEEE 1394. The descramble circuit 20 in the recording apparatus 2 includes the descramble circuits which cope with the two systems C and E, and the system C or the system E is selected so as to conform to the digital input signal and descramble the digital input signal.

Meanwhile, an analog input signal inputted from an external equipment is sampled by the A/D converter 19 so as to be converted into a digital signal. The digital signal outputted from the A/D converter 19 is compressed by the MPEG encoder 18 based on the MPEG (Moving Picture Experts Group) system.

Next, an output signal from the descramble circuit 20 or the MPEG encoder 18 is inputted into the watermark detection section 22 and the CCI insertion section 17. The watermark detection section 22 detects a watermark included in a digital input signal, namely, data embedded as an electronic watermark. In the case of the present embodiment, the watermark detection section 22 extracts the copy control information from the detected watermark and can determine whether or not the recording of the digital input signal onto the disc 100 is permitted.

Meanwhile, the CCI insertion section 17 inserts the watermark whose copy control information is updated based on the detected result of the watermark detection section 22 into a digital signal to be recorded onto the disc 100. For example, this corresponds to the processing that in the case where the original copy control information of the digital input signal is "Copy Once", this is updated to "No More Copy" and copying thereafter is forbidden.

An output signal from the CCI insertion section 17 is inputted into the scramble circuit 16. The scramble circuit 16 in the recording apparatus 2 includes only the scramble circuit of the system B. The scramble circuit 16 outputs a digital signal which is scrambled by the system B at the time of the condition that the recording is not forbidden as shown in FIG. 2.

After an output signal from the scramble circuit 16 is inputted into the signal processing circuit 15 and is subject to a signal processing such as an error correction processing, it is outputted into the LD driver 14. The LD driver 14 supplies a driving signal, which corresponds to a digital signal to be recorded, to a semiconductor laser of the pickup 11. As a result, recording data, which correspond to the digital input signal and which are scrambled by the system B, are written into the loaded disc 100.

In FIG. 4, the system control section 23 is connected to the respective components of the recording apparatus 2 via a bus, and sends a control signal so as to control the whole operation. The system control section 23 reads and executes a control program for controlling the recording operation on the disc 100 from a storage device (not shown) such as ROM.

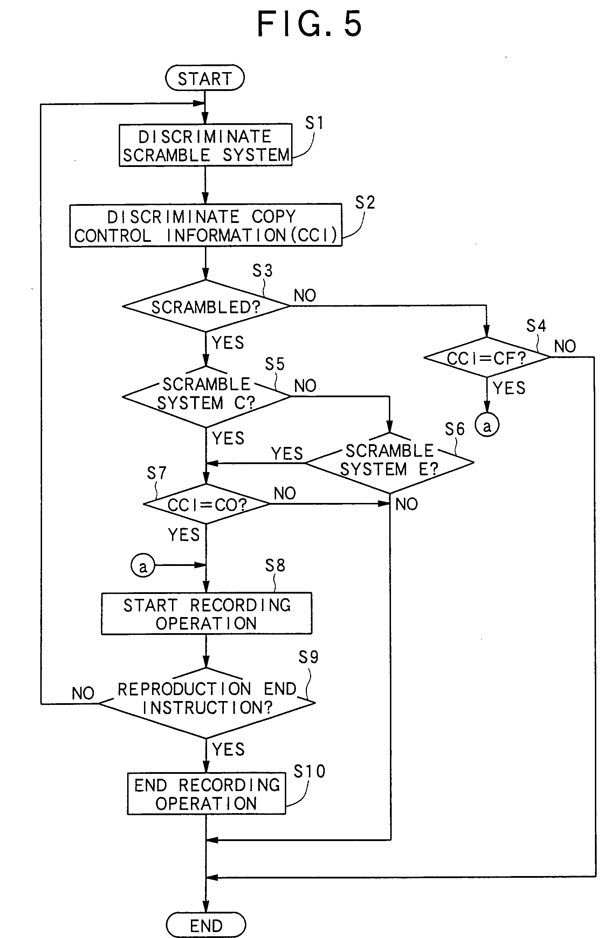

Next, with reference to a flowchart in FIG. 5, there will be explained below the recording operation in the recording apparatus 2 in FIG. 4. At first, a mutual authentication processing is executed for the externally connected equipment such as the receiving apparatus 1 so that the scramble system which is set for a digital input signal is discriminated (step S1). At this time, in the case where a key of the scramble is required, key data are obtained. The copy control information (CCI) which is set in a digital input signal is discriminated based on the detected result by means of the watermark detection section 22 (Step S2).

Next, a determination is made based on the determined result at step S1 as to whether or not the digital input signal is scrambled (step S3). When the determined result at step S3 is "NO", a determination is made based on the detected result of the watermark detection section 22 as to whether or not the copy control information is "Copy Free" (CF) (step S4). Namely, since the digital input signal of "Copy Free" is not scrambled, this determination is for excluding cases other than "Copy Free". When the determined result at step S4 is "YES", the sequence goes to step S8 in order to start the recording operation immediately. Meanwhile, when the determined result at step S4 is "NO", the processing in FIG. 5 is ended without starting the recording operation.

Next, when the determined result at step S3 is "YES", a determination is made as to whether or not the scramble is executed by the system C based on the determined result at step S2 (step S5). Similarly, when the determined result at step S5 is "NO", a determination is made as to whether or not the scramble is executed by the system E (step S6). When both the determined result at steps S5 and S6 are "NO", the digital input signal is not subject to the processing after step 6, and the processing in FIG. 5 is ended.

Next, when the determined results at steps S5 and S6 are "YES", namely, the digital input signal is scrambled by the system C or the system E, a determination is made as to whether or not the copy control information is "Copy Once" (CO) (step S7). Namely, a determination is made as to that, as shown in FIG. 3, the condition which permits the recording is that the scramble is done by means of the system C and the system E and the copy control information is set as "Copy Once". When the determined result at step S7 is "YES", the sequence goes to step S8 in order to start the recording operation. Meanwhile, when the determined result at step S7 is "NO", since the copy control information is set as "No More Copy", that means the recording onto the disc 100 is forbidden, the processing in FIG. 5 is ended. In the case where the selected conditions shown in FIG. 2 includes the recording forbidden, the sequence does not got to step S8, and the recording onto the disc 100 is not executed.

Meanwhile, the recording operation on the disc 100 is started at step S8. Namely, the digital input signal is scrambled according to the determined result at step S1 and is scrambled fixedly by the system B, and simultaneously the digital signal to be recorded is written onto the disc 100. Here, in the case where the copy control information of the digital input signal was originally set as "Copy Once", the copy control information is changed into "No More Copy" so that it is inserted as a watermark as mentioned above.

Thereafter, a determination is made as to whether or not the recording apparatus 2 receives a recording end instruction from an operator. When the determined result at step S9 is "NO", the sequence returns to step S1 so that the same processing is repeated. When the determined result at step S9 is "YES", the recording operation is ended (step S10) so that the processing in FIG. 5 is ended.

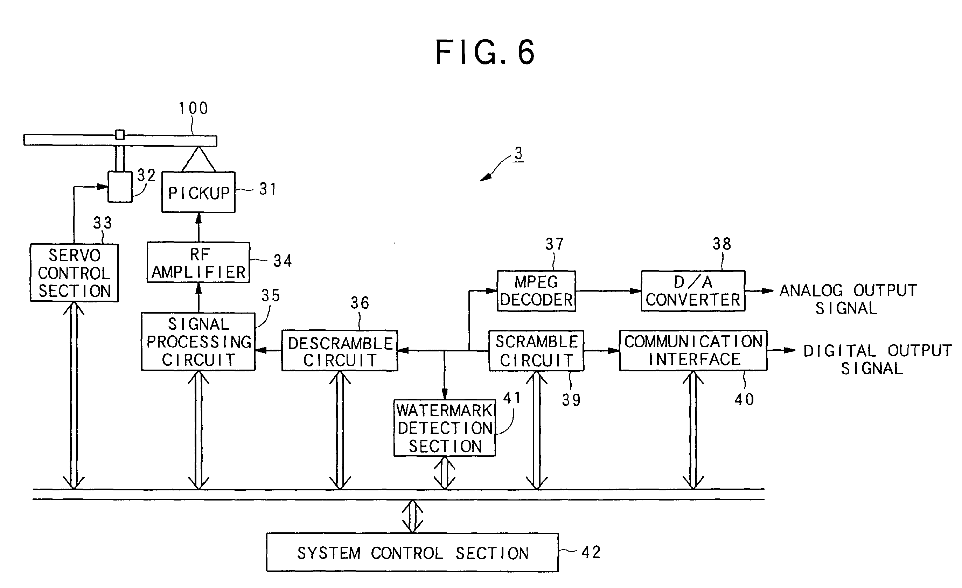

Next, FIG. 6 is a block diagram showing a schematic structure of the reproduction apparatus 3 according to the present embodiment. The reproduction apparatus 3 shown in FIG. 6 is composed of a pickup 31, a spindle motor 32, a servo control section 33, an RF amplifier 34, a signal processing circuit 35, a descramble circuit 36, an MPEG decoder 37, a D/A converter 38, a scramble circuit 39, a communication interface 40, a watermark detection section 41 and a system control section 42.

In the above structure, as the disc 100 loaded to the reproduction apparatus 3, a disc onto which a digital signal corresponding to various contents or the like is recorded according to a DVD format is used. When the disc 100 is loaded to the reproduction apparatus 3, while a constant linear velocity is maintained by the servo control section 33, the disc 100 is driven to be rotated by the spindle motor 32. A laser beam is emitted onto the disc 100 from the pickup 31, and an RF signal is generated based on its reflected light. After the RF signal outputted from the pickup 31 is inputted into the RF amplifier 34 so as to be amplified to a predetermined level, the amplified signal is subject to various signal processings such as an error correction processing in the signal processing circuit 35.

The digital signal outputted from the signal processing circuit 35 is inputted into the descramble circuit 36. The descramble circuit 36 in the reproduction apparatus 3 includes descramble circuits which cope with the two systems A and B, and selects the system A or the system B so as to conform to the digital signal so as to descramble the digital signal.

The output signal from the descramble circuit 36 is inputted into the scramble circuit 39, the MPEG decoder 37 and the watermark detection circuit 41. The descramble circuit 39 in the reproduction apparatus 3 includes scramble circuits which conform to the two systems D and E. As shown in FIG. 3, the scramble circuit 39 outputs a digital signal which was scrambled by the system D or the system E at the time of the condition that the reproduction is permitted. The digital signal outputted from the scramble circuit 39 is externally outputted via the communication interface 40. Similarly to the communication interface 21 of the recording apparatus 2, the communication interface 40 performs a predetermined communication interface operation according to the specification of IEEE 1394, for example.

Similarly, when the output signal from the descramble circuit 36 is inputted into the MPEG decoder 37, after the output signal is subject to an expansion processing based on the above MPEG system, it is converted into an analog signal by the D/A converter 38 so as to be externally outputted. Moreover, similarly to the above watermark detection section 22, the watermark detection section 41 detects data embedded as an electronic watermark in order to extract the copy control information or the like.

In FIG. 6, the system control section 43 is connected to the respective components of the reproduction apparatus 3 via a bus, and sends a control signal so as to control the whole operation. The system control section 43 reads a control program for controlling the reproduction operation on the disc 100 from a storage device (not shown) such as ROM so as to execute the control program.

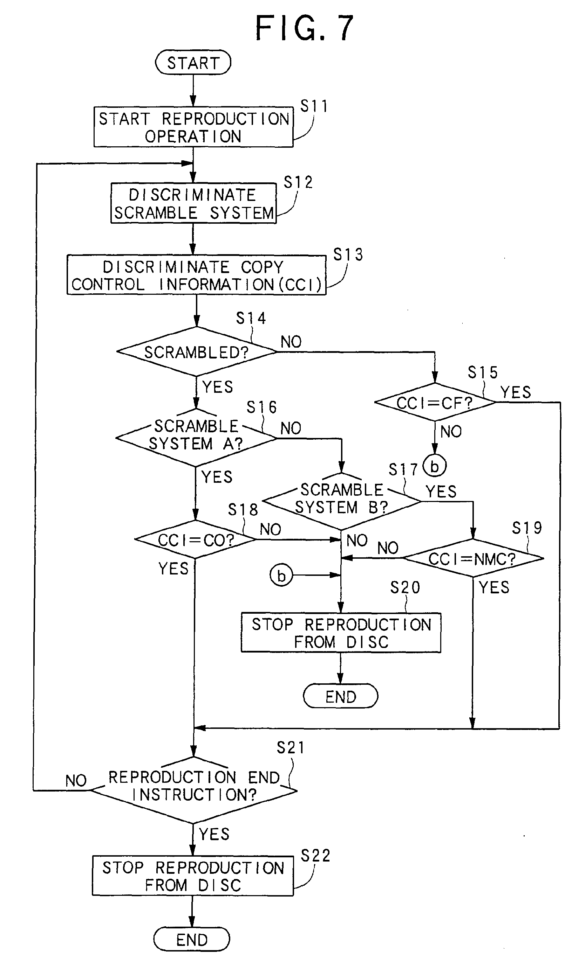

Next, with reference to a flowchart of FIG. 7, there will be explained below the reproduction operation in the reproduction apparatus 3 of FIG. 6. As shown in FIG. 7, the reproduction operation on the disc 100 attached to the reproduction apparatus 3 is started (step S11). The scramble system which is set for the disc 100 is discriminated (step S12). When a key is required for the scramble, key data are simultaneously obtained. Thereafter, the copy control information which is set for the read digital signal is discriminated based on the detected result by the watermark detection section 41 (step S13).

Next, a determination is made as to whether or not the digital signal is scrambled based on the discriminated result at step S13 (Step S14), and when the determined result is "NO", similarly to the step S4, a determination is made as to whether or not the copy control information is "Copy Free" (CF) based on the detected result by the watermark detection section 41 (step S15). When the determined result at step S15 is "YES", the sequence goes to step S21. Meanwhile, when the determined result at step S15 is "NO", the reproduction from the disc 100 is stopped (step s20), and the processing in FIG. 7 is ended.

Next, when the determined result at step S14 is "YES", a determination is made as to whether or not the digital signal is scrambled by the system A based on the discriminated result at step S13 (step S16). Similarly, when the determined result at step S16 is "NO", a determination is made as to whether or not the digital signal is scrambled by the system B (step S17). When both the determined results at steps S16 and S17 are "NO", the digital signal is not subject to the processing after the step 17, and the reproduction from the disc 100 is stopped (step S20) so that the processing in FIG. 7 is ended.

Next, when the determined result at step S16 is "YES", namely, the digital signal is scrambled by the system A, a determination is made as to whether or not the copy control information is "Copy Once" (CO) based on the detected result by the watermark detection section 41 (step S18). Namely, the determination is made as to the case where the first condition which permits the reproduction is that the scramble is done by means of the system A as shown in FIG. 2 and the copy control information is set as "Copy Once". When the determined result at step S18 is "YES", the sequence goes to step S21. Meanwhile, when the determined result at step S18 is "NO", since the reproduction is not permitted, the reproduction from the disc 100 is stopped (step S20), and the processing in FIG. 7 is ended.

In addition, when the determined result at step S17 is "YES", namely, when the digital signal is scrambled by the system B, a determined is made as to whether or not the copy control information is" No More Copy" (NMC) based on the detected result by the watermark detection section 41 (step S19). Namely, as shown in FIG. 2, the determination is made as to the case where the second condition which permits the reproduction is that the scramble is done by means of the system B and the copy control information is set as "No More Copy". When the determined result at step S19 is "YES", the sequence goes to step S21. Meanwhile, when the determined result at step S17 or step S19 is "NO", since the reproduction is not permitted, the reproduction from the disc 100 is stopped (step S20), and the processing in FIG. 7 is ended.

At step S21, a determination is made as to whether or not the reproduction apparatus 3 receives the reproduction end instruction by an operator. When the determined result at step S21 is "NO", the sequence returns to step S12 so that the same processing is repeated, and when "YES", the reproduction from the disc 100 is stopped (step S22) so that the processing in FIG. 7 is ended.

In the present embodiment, since both the recording apparatus and the reproduction apparatus execute the watermark detection after descramble, in the scramble system with which the descramble circuit does not cope, the copy control information cannot be discriminated, but also in this case, unauthorized recording and reproduction are prevented by discrimination of the scramble system (step 6 in FIG. 5 is "NO", and step S17 in FIG. 7 is "NO"). Moreover, in the system with which the descramble circuit does not cope, the digital signal is treated as non-scrambled signal because it is incapable of being determined. Namely, since the watermark detection is impossible, the digital signal may be recorded or reproduced directly in the state that the copy control information is regarded as "Copy Free". This is because even if the digital signal is recorded or reproduced directly, finally it cannot be decoded normally by the reproduction apparatus so as to become an error.

As mentioned above, according to the structure of the present embodiment, in the reproduction apparatus 2, since the selected conditions shown in FIG. 2 are set so that the reproduction operation of a digital signal is controlled, for example, unauthorized propagation of the digital signal via the path D1 can be cut off. Similarly, in the recording apparatuses 2 and 4, since the selected conditions shown in FIG. 3 are set so that the recording operation of the digital signal is controlled, for example, unauthorized propagation of the digital signal via the paths E1 and F1 can be cut off. In such a manner, when the method according to the present embodiment is applied, unauthorized copying of a digital signal corresponding to contents can be prevented effectively so that a protecting level of copyright of the contents can be further heightened.

The invention may be embodied in other specific forms without departing from the spirit or essential characteristics thereof. The present embodiments are therefore to be considered in all respects as illustrative and not restrictive, the scope of the invention being indicated by the appended claims rather than by the forgoing description and all changes which come within the meaning and range of equivalency of the claims are therefore intended to be embraces therein.

## Claims

1. A copyright protecting method of scrambling an information signal inputted via an input path (A1, B1, C1, E1) and outputting it via an output path (A1, B1, C1, E1), the information signal corresponding to contents which are to be protected under copyright, including copy control information, and being scrambled by means of a predetermined type of scramble system, **characterized in that** the copyright protecting method comprises:
a discriminating step of discriminating the type of the scramble system of the inputted information signal and the type of the copy control information of the inputted information signal;
a scramble system applying step of applying a predetermined scramble system to the inputted information signal and producing a scrambled output when a combination of the discriminated type of the scramble system and the discriminated type of the copy control information coincides with that included in a selected condition; and
wherein the selected condition including combinations of a plurality of types of scramble systems applicable to the information signal and a plurality of types of the copy control information to eliminate copying of the information signal via an unauthorized path (A2, A4, B2, C2, D1, D2, F1, F2).

2. The copyright protecting method according to claim 1, **characterized in that** a plurality of the scramble systems include scramble processings each having different algorithms and corresponding descramble processings.

3. The copyright protecting method according to claim 1, **characterized in that** a plurality of the scramble systems include scramble processings each having different keys and corresponding descramble processings.

4. The copyright protecting method according to claim 1, **characterized in that** the copy control information includes first control information indicating permission to copy the information signal only once and second control information indicating prohibition of copying the information signal after the information signal is copied once.

5. A recording method of recording an information signal inputted via an input path (A1, B1, C1, E1) on the recording medium (71, 73) according to copy control information, the information signal corresponding to contents which are to be protected under copy right, **characterized in that** the recording method comprises:
a discriminating step of discriminating the type of the scramble system of the inputted information signal and the type of the copy control information of the inputted information signal; and
a scramble system applying step of applying a predetermined scramble system to the inputted information signal and producing a scrambled output when a combination of the discriminated type of the scramble system and the discriminated type of the copy control information coincides with that included in a selected condition; and
a recording step of recording the scrambled output on the recording medium (71, 73),
wherein the selected condition including combinations of a plurality of types of scramble systems applicable to the information signal and a plurality of types of the copy control information to eliminate copying of the information signal via an unauthorized path (A2, A4, B2, C2, D1, D2, F1, F2).

6. The recording method according to claim 5, **characterized in that** the scramble system applying step applies a scramble system different from that of the information signal recorded on a prerecorded disc (74) to the inputted information signal when the discriminated type of the copy control information of the inputted information signal coincides with that of the inputted information signal recorded on the prerecorded disc (74) and produces the scrambled output.

7. The recording method according to claim 6, **characterized in that** the copy control information permits only one copy of the information signal.

8. The recording method according to claim 5, **characterized in that** the recording method further comprises a descramble system applying step of applying a predetermined descramble system to the inputted information signal,
wherein the scramble system applying step applies the predetermined scramble system to the inputted information signal after the predetermined descramble system is applied.

9. The recording method according to claim 8, **characterized in that** the predetermined descramble system is restricted to a descramble system corresponding to a scramble system which is previously set.

10. The recording method according to claim 9, **characterized in that**
the descramble system applying step applies two types of the predetermined descramble systems to two types of the inputted information signals respectively,
one type of the predetermined descramble system is a scramble system of the information signal to which the copy control information for permitting only one copy of the information signal outputted from a receiving apparatus (1) is given, and
another type of the predetermined descramble system is a scramble system of the information signal outputted when reproduction is executed from a recording medium (71, 73) to which the copy control information for permitting only one copy of the information signal is given.

11. The recording method according to claim 5, **characterized in that** the scramble system applying step applies only one predetermined scramble system to the inputted information signal, and the only one predetermined scramble system is a scramble system which is applied to the case where recording information to which copy control information for forbidding copies after the information signal is copied once is given is recorded onto the recording medium (71, 73).

12. A recording apparatus (2, 4) for recording an information signal inputted via an input path (A1, B1, C1, E1) onto a recording medium (71, 73) according to copy control information, the information signal corresponding to contents which are to be recorded on the recording medium, including copy control information, and being scrambled by means of a predetermined type of scramble system, **characterized in that** the recording apparatus comprises:
a discriminating device (23) for discriminating the type of the scramble system of the inputted information signal and the type of the copy control information of the inputted information signal;
a scramble system applying device (16) for applying a predetermined scramble system to the inputted information signal and producing a scrambled output when a combination of the discriminated type of the scramble system and the discriminated type of the copy control information coincides with that included in a selected condition; and
a recording device (11) for recording the scrambled output onto the recording medium,
wherein the selected condition including combinations of a plurality of types of scramble systems applicable to the information signal and a plurality of types of the copy control information to eliminate copying of the information signal via an unauthorized path (A2, A4, B2, C2, D1, D2, F1, F2).

13. The recording apparatus (2, 4) according to claim 12, **characterized in that** the scramble system applying device (16) applies a scramble system different from that of the information signal recorded on a prerecorded disc (74) to the inputted information signal when the discriminated type of the copy control information of the inputted information signal coincides with that of the inputted information signal recorded on the prerecorded disc (74) and produces the scrambled output.

14. The recording apparatus (2, 4) according to claim 13, **characterized in that** the copy control information permits only one copy of the information signal corresponding to the contents.

15. The recording apparatus (2, 4) according to claim 12, **characterized in that** the recording apparatus further comprises a descramble system applying device (20) for applying a predetermined descramble system to the inputted information signal,
wherein the scramble system applying device (16) applies the predetermined scramble system to the inputted information signal after the predetermined descramble system is applied.

16. The recording apparatus (2, 4) according to claim 15, **characterized in that** the predetermined descramble system is restricted to a descramble system corresponding to a scramble system which is previously set.

17. The recording apparatus (2, 4) according to claim 16, **characterized in that**
the descramble system applying device (20) applies two types of the predetermined descramble systems to two types of the inputted information signals respectively,
one type of the predetermined descramble system is a scramble system of the information signal to which the copy control information for permitting only one copy of the information signal outputted from a receiving apparatus (1) is given, and
another type of the predetermined descramble system is a scramble system of the information signal outputted when reproduction is executed from a recording medium (71, 73) to which the copy control information for permitting only one copy of the information signal is given.

18. The recording apparatus (2, 4) according to claim 12, **characterized in that** the scramble system applying device (23) applies only one predetermined scramble system to the inputted information signal, and the only one predetermined scramble system is a scramble system which is applied to the case where recording information to which copy control information for forbidding copies after the information signal is copied once is given is recorded onto the recording medium (71, 73).

19. A reproducing method of reading an information signal from a recording medium (71, 73) and reproducing it according to copy control information, the information signal corresponding to contents which are protected under copyright, being recorded on the recording medium (71, 73) via an input path (A1, B1, C1, E1), including copy control information, and being scrambled by means of a predetermined type of scramble system, **characterized in that** the reproducing method comprises:
a discriminating step of discriminating the type of the scramble system of the read information signal and the type of the copy control information of the read information signal;
a scramble system applying step of applying a predetermined scramble system to the read information signal and producing a scrambled output when a combination of the discriminated type of the scramble system and the discriminated type of the copy control information coincides with that included in a selected condition; and
a reproducing step of reproducing the scrambled output,
wherein the selected condition including combinations of a plurality of types of scramble systems applicable to the information signal and a plurality of types of the copy control information to eliminate copying of the information signal via an unauthorized path (A2, A4, B2, C2, D1, D2, F1, F2).

20. The reproduction method according to claim 19, **characterized in that** different scramble systems are applied to the information signal according to the combinations of the scramble systems of the information signal recorded on the recording medium (71, 73, 74) and the copy control information signals.

21. The reproduction method according to claim 20, **characterized in that** the scramble system applied to the information signal when reproduction is executed from the recording medium (71, 73, 74) to which copy control information for permitting only one copy of the information signal is given, is different from a scramble system, which is applied to the information signal when the reproduction is executed from the recording medium (71, 73, 74) onto which the information signal with copy control information for forbidding copies after the information signal is copied once is recorded, and is also different from the scramble system, which is applied to the information signal with copy control information for permitting only one copy of the information signal outputted from a receiving apparatus (1).

22. A reproducing apparatus (3) for reading an information signal from a recording medium (71, 73, 74) and reproducing it according to copy control information, the information signal corresponding to contents which are protected under copyright, being recorded on the recording medium (71, 73, 74) via an input path (A1, B1, C1, E1), including copy control information, and being scrambled by means of a predetermined type of scramble system, **characterized in that** the reproducing apparatus comprises:
a discriminating device (42) for discriminating the type of the scramble system of the read information signal and the type of the copy control information of the read information signal;
a scramble system applying device (39) of applying a predetermined scramble system to the read information signal and producing a scrambled output when a combination of the discriminated type of the scramble system and the discriminated type of the copy control information coincides with that included in a selected condition; and
a reproducing device (40) for reproducing the scrambled output,
wherein the selected condition including combinations of a plurality of types of scramble systems applicable to the information signal and a plurality of types of the copy control information to eliminate copying of the information signal via an unauthorized path (A2, A4, B2, C2, D1, D2, F1, F2).

23. The reproducing apparatus (3) according to claim 22, **characterized in that** different scramble systems are applied to the information signal according to the combinations of the scramble systems of the information signal recorded on the recording medium (71, 73) and the copy control information signals.

24. The reproduction apparatus according to claim 23, **characterized in that** the scramble system applied to the information signal when reproduction is executed from the recording medium (71, 73, 74) to which copy control information for permitting only one copy of the information signal is given, is different from a scramble system, which is applied to the information signal when the reproduction is executed from the recording medium (71, 73, 74) onto which the information signal with copy control information for forbidding copies after the information signal is copied once is recorded, and is also different from the scramble system, which is applied to the information signal with copy control information for permitting only one copy of the information signal outputted from a receiving apparatus (1).

25. A reproducing method of reading an information signal from a recording medium (71, 73, 74) and reproducing it according to copy control information, the information signal corresponding to contents which are protected under copyright, being recorded on the recording medium (71, 73, 74) via an input path, including copy control information, and being scrambled by means of a predetermined type of scramble system, **characterized in that** the reproducing method comprises:
a discriminating step of discriminating the type of the scramble system of the read information signal and the type of the copy control information of the read information signal; and
a forbidding reproducing step of forbidding reproducing the read information signal when a combination of the discriminated type of the scramble system and the discriminated type of the copy control information does not coincide with that included in a selected condition,
wherein the selected condition including combinations of a plurality of types of scramble systems applicable to the information signal and a plurality of types of the copy control information to eliminate copying of the information signal via an unauthorized path (A2, A4, B2, C2, D1, D2, F1, F2).

26. The reproduction method according to claim 25, **characterized in that** different scramble systems are applied to the information signal according to combinations of the scramble systems of information signal recorded onto the recording medium and the copy control information signals.

27. The reproduction method according to claim 26, **characterized in that** the scramble system applied to the information signal when reproduction is executed from the recording medium (71, 73, 74) to which copy control information for permitting only one copy of the information signal is given, is different from a scramble system, which is applied to the information signal when the reproduction is executed from the recording medium (71, 73, 74) onto which the information signal with copy control information for forbidding copies after the information signal is copied once is recorded, and is also different from the scramble system, which is applied to the information signal with copy control information for permitting only one copy of the information signal outputted from a receiving apparatus (1).

28. A reproducing apparatus (3) for reading an information signal from a recording medium (71, 73, 74) and reproducing it according to copy control information, the information signal corresponding to contents which are protected under copyright, being recorded on the recording medium (71, 73, 74) via an input path (A1, B1, C1, E1), including copy control information, and being scrambled by means of a predetermined type of scramble system, **characterized in that** the reproducing apparatus comprises:
a discriminating device for discriminating the type of the scramble system of the read information signal and the type of the copy control information of the read information signal; and
a forbidding reproducing device for forbidding reproducing the read information signal when a combination of the discriminated type of the scramble system and the discriminated type of the copy control information does not coincide with that included in a selected condition,
wherein the selected condition including combinations of a plurality of types of scramble systems applicable to the information signal and a plurality of types of the copy control information to eliminate copying of the information signal via an unauthorized path (A2, A4, B2, C2, D1, D2, F1, F2).

29. The reproduction apparatus according to claim 28, wherein different scramble systems are applied to the information signal according to combinations of the scramble systems of information signal recorded onto the recording medium and the copy control information signals.

30. The reproduction apparatus according to claim 29, wherein the scramble system applied to the information signal when reproduction is executed from the recording medium to which copy control information for permitting only one copy of the information signal is given, is different from a scramble system, which is applied to the information signal when the reproduction is executed from the recording medium onto which the information signal with copy control information for forbidding copies after the information signal is copied once is recorded, and is also different from the scramble system, which is applied to the information signal with copy control information for permitting only one copy of the information signal outputted from a receiving apparatus (1).
